# EUROPÄISCHE PATENTANMELDUNG

(11) **EP 4 269 733 A1**
(43) Veröffentlichungstag der Anmeldung: **01.11.2023**
(21) Anmeldenummer: 23150935.7
(22) Anmeldetag: 10.01.2023
(51) Int. Cl.: E05B 83/34, E05B 85/14, E05F 15/00, E05B 81/06, E05B 81/90

(54) **KRAFTFAHRZEUG-AUSSTELLBAUTEIL-ANTRIEBSSYSTEM**

(30) Priorität: 22.04.2022 DE 102022109714
(71) Anmelder: Huf Hülsbeck & Fürst GmbH & Co. KG, 42551 Velbert (DE)
(72) Erfinder: KOCH, Andreas, 42579 Heiligenhaus (DE); SCHÜTZ, Heiko, 42549 Velbert (DE)
(74) Vertreter: Zenz Patentanwälte Partnerschaft mbB

(57) **Zusammenfassung**

Die Erfindung betrifft ein Kraftfahrzeug-Ausstellbauteil-Antriebssystem (5), aufweisend ein Trägerelement (6), welches einen eine Ausnehmung (11) umgebenden Trägerrahmen (10) aufweist, einen Aktuator (7), welcher an dem Trägerelement (6) befestigt ist, eine Aktuator-Stelleinrichtung (8), welche von dem Aktuator (7) aus einer Grundposition heraus antreibend ausgebildet ist, ein Ausstellbauteil (4), welches zwischen einer Ruhestellung und einer Betriebsstellung bewegbar an dem Trägerelement (6) gelagert ist, und einen Riegelmechanismus (9), welcher eine Verriegelungsstellung oder eine Entriegelungsstellung einnehmbar ausgebildet ist, wobei die Aktuator-Stelleinrichtung (8) in Abhängigkeit ihrer von dem Aktuator (7) bewirkten Bewegung entweder in einer ersten Stellposition eine Entriegelungs-Kraft auf den Riegelmechanismus (9) zu dessen Entriegelungs-Bewegung aus der Verriegelungsstellung in die Entriegelungsstellung und ab einer zweiten Stellposition eine Ausstell-Kraft auf das Ausstellbauteil (4) zu dessen Ausstell-Bewegung aus der Ruhestellung in die Betriebsstellung übertragend ausgebildet ist.

## Beschreibung

Die Erfindung richtet sich auf ein Kraftfahrzeug-Ausstellbauteil-Antriebssystem mit einem an einer Kraftfahrzeug-Karosserie befestigbar ausgebildeten Trägerelement, einem Aktuator, welcher an dem Trägerelement befestigt ist, und einem bewegbar an dem Trägerelement gelagerten Ausstellbauteil, welches zwischen einer Ruhestellung und einer Betriebsstellung bewegbar ist.

Ein solches Kraftfahrzeug-Ausstellbauteil-Antriebssystem ist aus dem Stand der Technik bekannt, wobei das Ausstellbauteil entweder ein flächenbündiger und ausfahrbarer Türaußengriff, welcher in seiner ausgefahrenen Stellung von einem Benutzer gehandhabt werden kann, oder eine Ladeklappe, welche in der Ruhestellung einen Anschluss für einen Ladestecker abdeckt, sein kann. Bei einem solchen bekannten Kraftfahrzeug-Ausstellbauteil-Antriebssystemen werden für die Entriegelung ein entsprechender Aktuator und zusätzlich für die Bewegung des Ausstellbauteils ein weiterer Aktuator verwendet, wodurch in nachteiliger Weise ein entsprechend großer Bauraum vorgesehen sein muss und wodurch sich die Anzahl der Bauteile des Kraftfahrzeug-Ausstellbauteil-Antriebssystems erhöht, was sich ebenso nachteilig auf die Herstellungskosten auswirkt.

Der Erfindung liegt die Aufgabe zugrunde eine Lösung zu schaffen, die auf konstruktiv einfache Weise ein Kraftfahrzeug-Ausstellbauteil-Antriebssystem bereitstellt, durch welches der vorzusehende Bauraum auf ein Minimum reduziert werden kann und welches gegenüber den bekannten Systemen ein Minimum an Bauteilen benötigt.

Die Aufgabe wird erfindungsgemäß gelöst durch ein Kraftfahrzeug-Ausstellbauteil-Antriebssystem mit den Merkmalen gemäß dem Anspruch 1.

Das erfindungsgemäße Kraftfahrzeug-Ausstellbauteil-Antriebssystem weist ein an einer Kraftfahrzeug-Karosserie befestigbar ausgebildetes Trägerelement, welches einen eine Ausnehmung umgebenden Trägerrahmen und eine sich von dem Trägerrahmen aus erstreckende Lagerungseinrichtung aufweist, einen Aktuator, welcher an dem Trägerelement befestigt ist, eine Aktuator-Stelleinrichtung, welche bewegbar an dem Trägerelement gelagert ist und welche von dem Aktuator aus einer Grundposition heraus entlang eines Stellweges antreibend ausgebildet ist, ein Ausstellbauteil, welches zwischen einer Ruhestellung, in welcher das Ausstellbauteil bündig in der Ausnehmung des Trägerelements angeordnet ist, und einer Betriebsstellung, in welcher das Ausstellbauteil aus der Ausnehmung des Trägerelements herausbewegt angeordnet ist, bewegbar an dem Trägerelement gelagert ist, und einen Riegelmechanismus auf, welcher eine Verriegelungsstellung, in welcher der Riegelmechanismus eine Bewegung des Ausstellbauteils aus der Ruhestellung heraus blockierend ausgebildet ist, oder eine Entriegelungsstellung, in welcher der Riegelmechanismus eine Bewegung des Ausstellbauteils freigebend ausgebildet ist, einnehmbar ausgebildet ist, wobei die Aktuator-Stelleinrichtung in Abhängigkeit ihrer von dem Aktuator bewirkten Bewegung entlang des Stellweges entweder in einer ersten Stellposition eine Entriegelungs-Kraft auf den Riegelmechanismus zu dessen Entriegelungs-Bewegung aus der Verriegelungsstellung in die Entriegelungsstellung und ab einer zweiten Stellposition eine Ausstell-Kraft auf das Ausstellbauteil zu dessen Ausstell-Bewegung aus der Ruhestellung in die Betriebsstellung übertragend ausgebildet ist.

Vorteilhafte und zweckmäßige Ausgestaltungen und Weiterbildungen der Erfindung ergeben sich aus den Unteransprüchen.

Durch die Erfindung wird ein Kraftfahrzeug-Ausstellbauteil-Antriebssystem zur Verfügung gestellt, welches sich durch eine einfache Konstruktion und durch ein besonderes Konzept hinsichtlich des Riegelmechanismus und des Ausstellbauteils auszeichnet, die beide von der Aktuator-Stelleinrichtung betätigt werden, wobei die Aktuator-Stelleinrichtung lediglich von einem Aktuator angetrieben wird. Denn der eine einzige Aktuator sorgt dafür, dass die Aktuator-Stelleinrichtung in Abhängigkeit ihrer von dem Aktuator bewirkten Bewegung entlang des Stellweges entweder in einer ersten Stellposition eine Entriegelungs-Kraft auf den Riegelmechanismus zu dessen Entriegelungs-Bewegung aus der Verriegelungsstellung in die Entriegelungsstellung und/oder ab einer zweiten Stellposition eine Ausstell-Kraft auf das Ausstellbauteil zu dessen Ausstell-Bewegung aus der Ruhestellung in die Betriebsstellung überträgt. Durch die Verwendung eines einzigen Aktuators ist folglich eine Reduzierung des erforderlichen Bauraums auf ein Minimum möglich, wobei zusätzlich die Anzahl an Bauteilen für das erfindungsgemäße Kraftfahrzeug-Ausstellbauteil-Antriebssystem reduziert wird. Dabei kann es sich bei dem erfindungsgemäßen Kraftfahrzeug-Ausstellbauteil-Antriebssystem um ein AntriebsSystem für ein Kraftfahrzeug-Ausstellbauteil, wie zum Beispiel für eine Kraftfahrzeug-Ladeklappe oder einen Kraftfahrzeug-Türgriff, handeln, wobei auch weitere Ausstellbauteile eines Kraftfahrzeugs denkbar sind.

Damit der Aktuator nur die im aktuellen Zeitpunkt erforderliche Kraft aufbringt, sieht die Erfindung in Ausgestaltung vor, dass die Aktuator-Stelleinrichtung bis zum Erreichen der ersten Stellposition den Aktuator mit dem Riegelmechanismus bewegungsgekoppelt ausgebildet ist und ab der zweiten Stellposition den Aktuator mit dem Ausstellbauteil bewegungsgekoppelt ausgebildet ist.

Ebenso ist für einen effizienten Betrieb des Aktuators in Ausgestaltung der Erfindung vorgesehen, dass die Aktuator-Stelleinrichtung bei einer Bewegung entlang des Stellweges ab der ersten Stellposition den Aktuator von der Riegelmechanismus bewegungsentkoppelt ausgebildet ist.

In weiterer Ausgestaltung der Erfindung ist es für einen effizienten Betrieb des Aktuators von Vorteil, wenn die Aktuator-Stelleinrichtung bei einer Bewegung bis zu der zweiten Stellposition nach Art eines Freilaufs den Aktuator von dem Ausstellbauteil bewegungsentkoppelt ausgebildet ist.

Von Vorteil für einen minimalen Bauraum sieht die Erfindung in Ausgestaltung vor, dass die Aktuator-Stelleinrichtung einen Stellhebel aufweist, welcher mit einer Antriebswelle des Aktuators drehfest verbunden ist, wobei der Stellhebel bei einer Bewegung entlang des Stellwegs bis zu der ersten Stellposition mit dem Riegelmechanismus wirkverbunden ist. Entsprechend wird der Stellhebel bei seiner Bewegung verschwenkt, so dass es sich bei der Stellposition um einen Stellwinkel handelt.

Konstruktiv besonders günstig ist es dabei, wenn in Ausgestaltung der Erfindung der Riegelmechanismus einen Zughebel aufweist, welcher schwenkbar an dem Trägerelement gelagert ist, wobei der Stellhebel bei seiner Bewegung bis zu der ersten Stellposition die Entriegelungs-Kraft auf den Zughebel übertragend ausgebildet ist.

Für einen geringen Bauraum ist ferner in Ausgestaltung der Erfindung vorgesehen, dass der Riegelmechanismus ein schwenkbar an dem Trägerelement gelagertes Rastelement und ein an dem Ausstellbauteil angeformtes Gegenrastelement aufweist, wobei das Rastelement über ein Bowdenzugkabel mit dem Zughebel bewegungsgekoppelt ausgebildet ist, und wobei in der Verriegelungsstellung das Rastelement mit dem Gegenrastelement in Eingriff stehend angeordnet ist und in der Entriegelungsstellung das Rastelement außer Eingriff mit dem Gegenrastelement stehend angeordnet ist.

In weiterer Ausgestaltung sieht die Erfindung für ein effizientes Konzept der Entriegelung/Verriegelung vor, dass der Zughebel bei in der Verriegelungsstellung angeordnetem Riegelmechanismus in einer Ausgangsstellung angeordnet ist, wobei der Stellhebel bei seiner Bewegung in die erste Stellposition den Zughebel in eine Wirkstellung, in welcher der Riegelmechanismus in seiner Entriegelungsstellung angeordnet ist, drängend ausgebildet ist.

Damit nach einer Entriegelung der Riegelmechanismus nicht schlagartig wieder in seine Verriegelungsstellung zurückfällt, was gegebenenfalls mit einer unerwünschten Geräuschentwicklung verbunden sein kann und ferner zu einer erneuten und unerwünschten Verriegelung führen kann, wenn das Ausstellbauteil sich noch gar nicht in Richtung seiner Betriebsstellung bewegt haben sollte, sieht die Erfindung in Ausgestaltung vor, dass der Zughebel eine Rückstellfläche aufweist, an welcher sich der Stellhebel bei seiner Bewegung ab der zweiten Stellposition anliegend entlang bewegt, wobei die Rückstellfläche den Zughebel bei der Bewegung des Stellhebels ab der zweiten Stellposition in seine Ausgangsstellung zurückbewegend ausgebildet ist.

Für eine effizient bewirkte Bewegung des Ausstellbauteils ist es in weiterer Ausgestaltung der Erfindung von Vorteil, wenn die Aktuator-Stelleinrichtung ein mit dem Ausstellbauteil drehfest verbundenes Ausstell-Element aufweist, welches bei der Bewegung des Stellhebels bis in die erste Stellposition von dem Stellhebel bewegungsentkoppelt ist und welches bei der Bewegung des Stellhebels ab der zweiten Stellposition mit dem Stellhebel bewegungsgekoppelt verbunden ist.

Im Hinblick auf ein kompaktes Kraftfahrzeug-Ausstellbauteil-Antriebssystem sieht die Erfindung in Ausgestaltung vor, dass das Ausstell-Element mit dem Stellhebel auf der der Antriebswelle gegenüberliegenden Seite des Stellhebels drehbar verbunden ist.

Dabei ist das Ausstell-Element für einen gewissen Winkelbereich drehbar mit dem Stellhebel verbunden, wohingegen für einen anderen Winkelbereich eine drehfeste Verbindung vorliegt. Dementsprechend sieht die Erfindung in Ausgestaltung vor, dass das Ausstell-Element einen zylinderförmigen Grundkörper aufweist, welcher in einen zylinderförmigen Basiskörper des Stellhebels eingesteckt angeordnet ist, wobei der zylinderförmige Basiskörper eine kreisbogenabschnittsförmige Ausnehmung aufweist, aus welcher ein hebelförmig ausgebildetes und an dem Grundkörper angeformtes Anschlagelement derart hervorsteht, dass der Grundkörper zu dem Basiskörper bis zu den Endseiten der Ausnehmung drehbar gelagert ist.

Diesbezüglich ist dann in weiterer Ausgestaltung der Erfindung vorgesehen, dass sich der Basiskörper bei der Bewegung des Stellhebels bis in die erste Stellposition relativ zu dem Grundkörper bewegt, und wobei bei der Bewegung des Stellhebels aus der ersten Stellposition in Richtung der zweiten Stellposition das Anschlagelement an einem Ende der Ausnehmung derart anliegend angeordnet ist, dass sich der Stellhebel und das Ausstell-Element gemeinsam in Richtung der zweiten Stellposition bewegen.

Damit das Ausstellbauteil in seiner Ruhestellung gehalten wird oder damit die Bewegung des Ausstellbauteils in die Betriebsstellung unterstützt wird, sieht die Erfindung in weiterer Ausgestaltung vor, dass ein Federelement vorgesehen ist, von welchem ein erster Federarm an dem hebelförmig ausgebildeten Anschlagelement des Ausstell-Elements und ein zweiter Federarm an dem Stellhebel derart angeifen, dass in der Verriegelungsstellung ein erstes Federmoment in Ruhestellung des Ausstellbauteils auf die Aktuator-Stelleinrichtung wirkt und in der Entriegelungsstellung ein zweites Federmoment in Betriebsstellung des Ausstellbauteils auf die Aktuator-Stelleinrichtung wirkt.

Für den Fall eines Notbetriebs des Kraftfahrzeug-Ausstellbauteil-Antriebssystems, wie beispielsweise bei nicht vorhandener Energie für den Aktuator, ist in Ausgestaltung der Erfindung ein stromloser Notbetrieb bereitgestellt, indem ein manuell betätigbarer Notbetätigungshebel vorgesehen ist, welcher drehbar an dem Stellhebel gelagert ist und welcher durch einen Benutzer in eine Notbetätigungsstellung bewegbar ist, in welcher das Ausstellbauteil in seine Betriebsstellung bewegt angeordnet ist.

Eine kompakte Bauweise für den Notbetrieb ist in Ausgestaltung der Erfindung dadurch gegeben, dass an dem Notbetätigungshebel ein Mitnehmer-Ansatz ausgebildet ist, welcher bei einer Bewegung des Notbetätigungshebels in Richtung seiner Notbetätigungsstellung in Anlage an den Stellhebel gelangt und den Stellhebel entlang seines Stellweges in die erste Stellposition und in die zweite Stellposition bewegend ausgebildet ist.

Schließlich sieht die Erfindung in weiterer Ausgestaltung vor, dass das Ausstellbauteil als ein ausfahrbarer und flächenbündiger Kraftfahrzeugtüraußengriff ausgebildet ist, welcher in der Betriebsstellung von einem Bediener ergreifbar und handhabbar angeordnet ist.

Alternativ ist es in Ausgestaltung denkbar, dass das Ausstellbauteil als eine Ladeklappe ausgebildet ist, welche in der Betriebsstellung die Ausnehmung für einen Ladestecker freigebend angeordnet ist. Es sei angemerkt, dass unter dem Begriff "Ladeklappe" im Sinne der Erfindung eine Ladeklappe für das Auftanken eines Kraftfahrzeugs mit traditionellem Kraftstoff oder Wasserstoff sowie eine Ladeklappe für das Aufladen einer Batterie eines Kraftfahrzeugs, also eines sogenannten Elektrofahrzeugs, zu verstehen ist, wobei die Ladeklappe entweder einen mit einem Kraftstofftank in Verbindung stehenden und von einem Tankdeckel verschlossenen Tankstutzen oder eine Ladebuchse für einen Ladestecker abdeckt.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der Erfindung dargestellt ist.

In der Zeichnung zeigt:
Figur 1 eine schematische Seitenansicht eines Kraftfahrzeugs mit beispielhaften Ausstellbauteilen für ein erfindungsgemäßes Kraftfahrzeug-Ausstellbauteil-Antriebssystem,
Figur 2 eine perspektivische Ansicht des erfindungsgemäßen Kraftfahrzeug-Ausstellbauteil-Antriebssystems,
Figur 3 eine perspektivische Einzelteildarstellung des erfindungsgemäßen Kraftfahrzeug-Ausstellbauteil-Antriebssystems,
Figur 4 eine perspektivische Detailansicht auf eine Aktuator-Stelleinrichtung und einen Teil eines Riegelmechanismus des Kraftfahrzeug-Ausstellbauteil-Antriebssystems,
Figur 5 eine weitere perspektivische Detailansicht auf die Aktuator-Stelleinrichtung und auf einen Teil des Ausstellbauteils,
Figur 6 eine Detailansicht auf einen Stellhebel und ein Ausstell-Element der Aktuator-Stelleinrichtung in Perspektivansicht,
Figur 7 eine Perspektivansicht auf den Stellhebel und das Ausstell-Element für die Verriegelungsstellung,
Figur 8 eine Perspektivansicht auf den Stellhebel und das Ausstell-Element für eine erste Stellposition der Aktuator-Stelleinrichtung,
Figur 9 eine Perspektivansicht auf den Stellhebel und das Ausstell-Element für eine zweite Stellposition der Aktuator-Stelleinrichtung,
Figur 10 eine perspektivische Ansicht auf die Aktuator-Stelleinrichtung, das Ausstellbauteil und den Riegelmechanismus in Verriegelungsstellung,
Figur 11 eine Seitenansicht der Figur 10,
Figur 12 eine perspektivische Ansicht auf die Aktuator-Stelleinrichtung in der ersten Stellposition, das Ausstellbauteil und den Riegelmechanismus in Entriegelungsstellung,
Figur 13 eine Seitenansicht der Figur 12,
Figur 14 eine Perspektivansicht auf das Ausstellbauteil, die Aktuator-Stelleinrichtung und den Riegelmechanismus in Entriegelungsstellung,
Figur 15 eine Detailansicht auf einen Teil des Riegelmechanismus,
Figur 16 eine perspektivische Ansicht auf die Aktuator-Stelleinrichtung in der Verriegelungsstellung,
Figur 17 eine perspektivische Ansicht auf die Aktuator-Stelleinrichtung in der Entriegelungsstellung,
Figur 18 eine perspektivische Ansicht auf das Ausstellbauteil und die Aktuator-Stelleinrichtung, welche in Richtung der zweiten Stellposition bewegt wird,
Figur 19 eine Seitenansicht der Figur 18,
Figur 20 eine perspektivische Detailansicht auf das Ausstellbauteil in Betriebsstellung und die Aktuator-Stelleinrichtung in der zweiten Stellposition,
Figur 21 eine Perspektivansicht auf das Ausstellbauteil in Betriebsstellung und die Aktuator-Stelleinrichtung in der zweiten Stellposition,
Figur 22 eine Detailansicht auf das Ausstellbauteil, die Aktuator-Stelleinrichtung und einen Notbetätigungshebel,
Figur 23 eine perspektivische Ansicht auf die Aktuator-Stelleinrichtung und den Notbetätigungshebel,
Figur 24 eine seitliche Perspektivansicht auf den Stellhebel der Aktuator-Stelleinrichtung und den Notbetätigungshebel, und
Figur 25 eine weitere seitliche Perspektivansicht auf den Stellhebel der Aktuator-Stelleinrichtung und den Notbetätigungshebel.

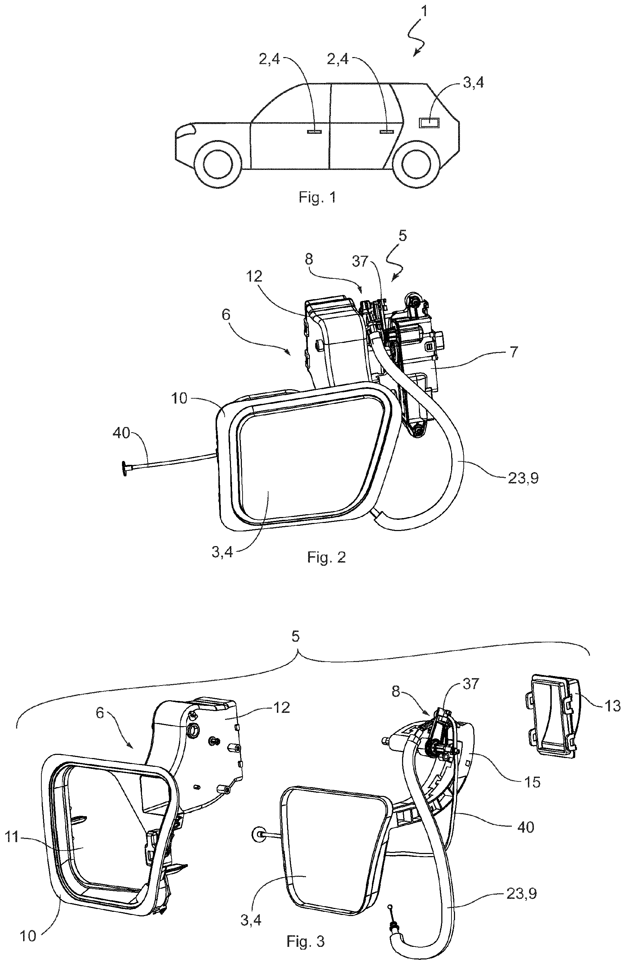

In Figur 1 ist ein Kraftfahrzeug 1 in Form eines PKWs exemplarisch dargestellt, welches in dem Beispiel über mehrere Kraftfahrzeugtüraußengriffe 2 und eine Ladeklappe 3 verfügt. Ein jeweiliger Kraftfahrzeugtüraußengriff 2 und die Ladeklappe 3 stellen dabei im Sinne der Erfindung ein Ausstellbauteil 4 dar, welches somit als ein ausfahrbarer und flächenbündiger Kraftfahrzeugtüraußengriff 2, welcher in einer Betriebsstellung von einem Bediener ergreifbar und handhabbar angeordnet ist, oder als eine Ladeklappe 3, welche in einer Betriebsstellung eine Ausnehmung für einen Ladestecker freigebend angeordnet ist, ausgebildet sein. Der Kraftfahrzeugtüraußengriff 2 und die Ladeklappe 3 sind nur zwei von vielen denkbaren Beispielen, wie das Ausstellbauteil 4 ausgebildet sein kann.

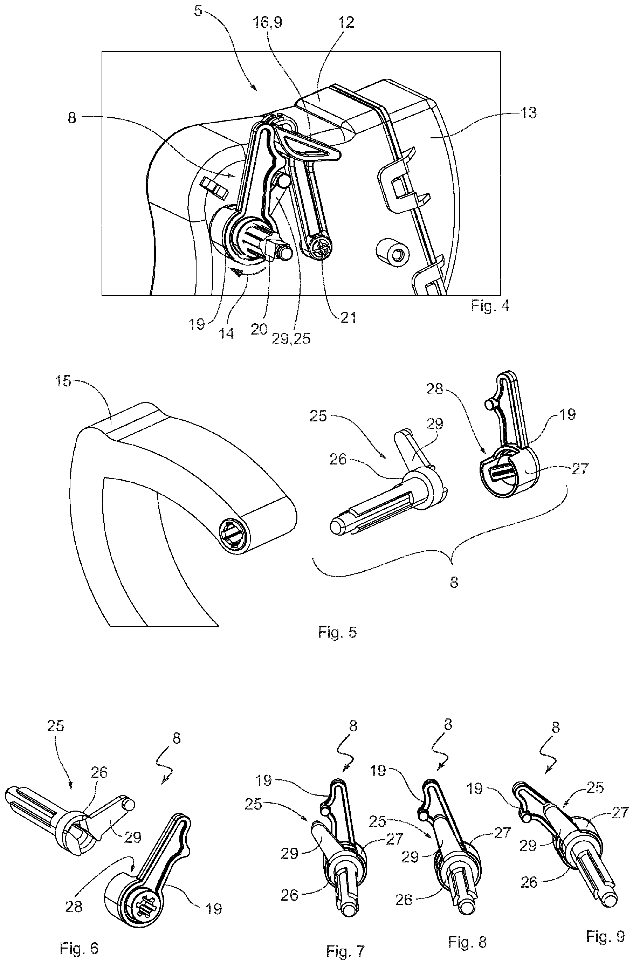

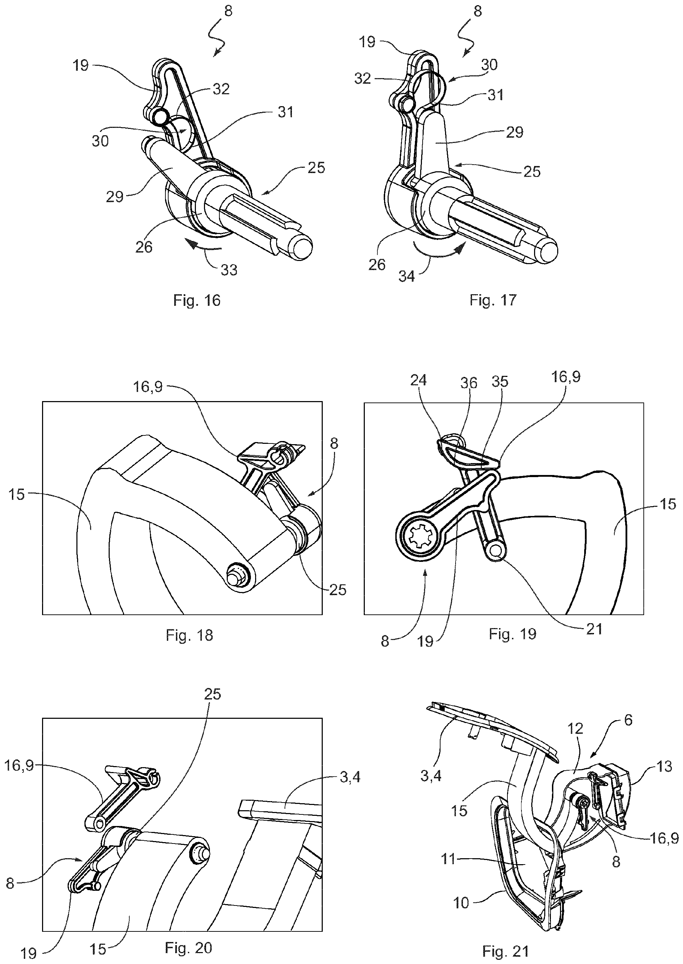

Das Ausstellbauteil 4 ist Teil eins erfindungsgemäßen Kraftfahrzeug-Ausstellbauteil-Antriebssystems 5, welches in Figur 2 in einer perspektivischen Ansicht und in Figur 3 in einer teilweisen Einzelteildarstellung gezeigt ist. Zusätzlich zu dem Ausstellbauteil 4 weist das Kraftfahrzeug-Ausstellbauteil-Antriebssystem 5 ein Trägerelement 6, einen Aktuator 7, eine Aktuator-Stelleinrichtung 8 und einen Riegelmechanismus 9 auf. Das Trägerelement 6 ist im eingebauten Zustand in dem Kraftfahrzeug 1 innenseitig an einer Kraftfahrzeug-Karosserie befestigt und weist einen Trägerrahmen 10, welcher eine Ausnehmung 11 umgibt, und eine sich von dem Trägerrahmen 10 aus erstreckende Lagerungseinrichtung 12 auf. Die Lagerungseinrichtung 12 ist gehäuseartig ausgebildet und weist unter anderem zur Abdichtung einen Lagerungsdeckel 13 auf. Wie aus der Figur 2 ersichtlich ist, ist der Aktuator 7 an der Lagerungseinrichtung 12 des Trägerelements 6 befestigt, wobei aus Gründen der Übersichtlichkeit der Aktuator 7 in Figur 3 weggelassen wurde. Zwischen dem Aktuator 7 und der Lagerungseinrichtung 12 ist dann die Aktuator-Stelleinrichtung 8 angeordnet, welche bewegbar an der Lagerungseinrichtung 12 des Trägerelements 6 gelagert ist und welche von dem Aktuator 7 aus einer Grundposition heraus entlang eines Stellweges 14 antreibend ausgebildet ist. Der Stellweg 14 ist in Figur 4 angedeutet und beschreibt eine drehende Bewegungsrichtung. Das Ausstellbauteil 4 ist in dem in den Figuren dargestellten Ausführungsbeispiel als eine Ladeklappe 3 ausgebildet, wobei nachstehend nur noch von Ausstellbauteil 4 gesprochen wird. Dabei wird das Ausstellbauteil 4 über die Aktuator-Stelleinrichtung 8 von dem Aktuator 7 zwischen einer in Figur 2 gezeigten Ruhestellung, in welcher das Ausstellbauteil 4 bündig in der Ausnehmung 11 des Trägerrahmens 10 des Trägerelements 6 angeordnet ist, und einer Betriebsstellung (siehe Figur 21), in welcher das Ausstellbauteil 4 aus der Ausnehmung 11 des Trägerrahmens 10 des Trägerelements 6 herausbewegt angeordnet ist, bewegt. Das Ausstellbauteil 4 ist dabei über einen Schwenkarm 15 an der Aktuator-Stelleinrichtung 8 gelagert, wobei der Schwenkarm 15 innerhalb der gehäuseartigen Lagerungseinrichtung 12 angeordnet ist. Der Riegelmechanismus 9 nimmt entweder eine Verriegelungsstellung, in welcher der Riegelmechanismus 9 eine Bewegung des Ausstellbauteils 4 aus der Ruhestellung heraus blockierend ausgebildet ist, oder eine Entriegelungsstellung ein, in welcher der Riegelmechanismus 9 eine Bewegung des Ausstellbauteils 4 freigebend ausgebildet ist.

Für die Erfindung ist es charakteristisch, dass die Aktuator-Stelleinrichtung 8 in Abhängigkeit ihrer von dem Aktuator 7 bewirkten Bewegung entlang des Stellweges 14 entweder in einer ersten Stellposition eine Entriegelungs-Kraft auf den Riegelmechanismus 9 zu dessen Entriegelungs-Bewegung aus der Verriegelungsstellung in die Entriegelungsstellung und ab einer zweiten Stellposition eine Ausstell-Kraft auf das Ausstellbauteil 4 zu dessen Ausstell-Bewegung aus der Ruhestellung in die Betriebsstellung übertragend ausgebildet ist, was nachstehend im Detail anhand eines Entriegelungsvorgangs des Riegelmechanismus 9 und eines Ausstellvorgangs des Ausstellbauteils 4 erläutert wird.

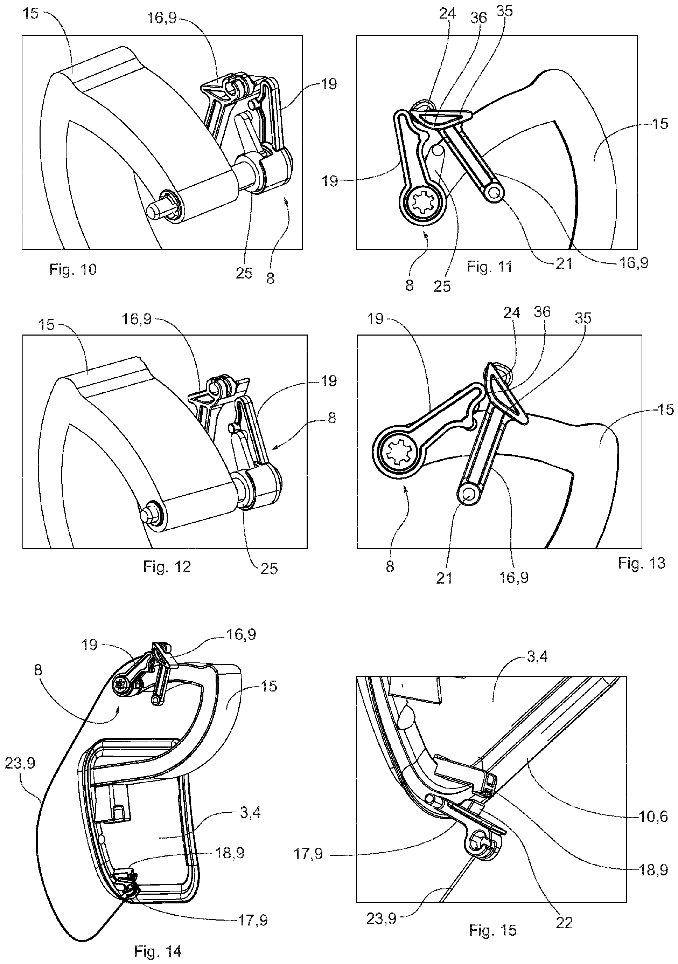

Der Riegelmechanismus 9 weist einen Zughebel 16, ein Rastelement 17 und ein Gegenrastelement 18 auf, wohingegen die Aktuator-Stelleinrichtung 8 einen Stellhebel 19 aufweist. Der Stellhebel 19 ist mit einer in Figur 4 gezeigten Antriebswelle 20 des Aktuators 7 über eine formschlüssige Verbindung drehfest verbunden, so dass sich der Stellhebel 19 mit der Antriebswelle 20 dreht. Der Zughebel 16 des Riegelmechanismus 9 ist an einer Schwenkachse 21 gelagert, welche beabstandet zu der Antriebswelle 20 angeordnet ist und welche an der Lagerungseinrichtung 12 des Trägerelements 6 angeformt ist, wie es zum Beispiel aus Figur 4 ersichtlich ist. Das Rastelement 17 und das Gegenrastelement 18 sind in den Figuren 14 und 15 gezeigt, wobei das Rastelement 17 schwenkbar an dem Trägerelement 6 gelagert ist und einen Rasthaken 22 aufweist, welcher in der Verriegelungsstellung mit dem Gegenrastelement 18 in Eingriff steht. Dabei ist das Gegenrastelement 18 an dem Ausstellbauteil 4 angeformt. Wie unter anderem die Figuren 3 und 14 darstellen, ist das Rastelement 17 über ein Bowdenzugkabel 23 mit dem Zughebel 16 bewegungsgekoppelt ausgebildet. Es ist ersichtlich, dass in der Verriegelungsstellung das Rastelement 17 mit dem Gegenrastelement 18 in Eingriff stehend angeordnet ist, wohingegen in der in Figur 15 gezeigten Entriegelungsstellung das Rastelement 17 außer Eingriff mit dem Gegenrastelement 18 stehend angeordnet ist.

Die Figuren 10 und 11 zeigen einen Betriebszustand des Kraftfahrzeug-Ausstellbauteil-Antriebssystem 5, in welchem das Ausstellbauteil 4 in seiner in der Ausnehmung 11 angeordneten Ruhestellung, die Aktuator-Stelleinrichtung 8 mit dem Stellhebel 19 in einer Grundposition, der Riegelmechanismus 9 in der Verriegelungsstellung und der Zughebel 16 in einer Ausgangsstellung angeordnet sind. In diesem Betriebszustand kann ein Benutzer zum Beispiel mit einem bekannten ID-Geber das Kraftfahrzeug-Ausstellbauteil-Antriebssystem 5 in Betrieb setzen und zumindest für eine Entriegelung des Ausstellbauteils 4 oder sogar zusätzlich für eine Ausstellung des Ausstellbauteils 4 sorgen.

Durch das in Betrieb setzen des Kraftfahrzeug-Ausstellbauteil-Antriebssystems 5 wird der Aktuator 7 in Betrieb gesetzt, welcher nun über seine Antriebswelle 20 den Stellhebel 19 der Aktuator-Stelleinrichtung 5 entlang des Stellweges 14 in die erste Stellposition bewegt, welche aus den Figuren 12 und 13 ersichtlich ist. Bei der Bewegung entlang des Stellwegs 14 bis zu der ersten Stellposition ist der Stellhebel 19 mit dem Riegelmechanismus 9 wirkverbunden, wobei der Stellhebel 19 bei seiner Bewegung bis zu der ersten Stellposition die Entriegelungs-Kraft auf den Zughebel 16 übertragend ausgebildet ist. Der Zughebel 16 ist endseitig mit einer Entriegelungsfläche 24 ausgebildet, gegen welche der Stellhebel 19 bei seiner Bewegung in die erste Stellposition derart drückt, dass der Zughebel 16 aus seiner Ausgangsstellung in eine in den Figuren 12 und 13 gezeigten Wirkstellung verschwenkt wird. Bei der Bewegung in die Wirkstellung wirkt infolge der Verschwenkung des Zughebels 16 das Bowdenzugkabel 23 auf das Rastelement 17 ein und verschwenkt das Rastelement 17 derart, dass es außer Eingriff mit dem Gegenrastelement 18 gelangt. In der Wirkstellung des Zughebels 16 ist der Riegelmechanismus 9 dann in seiner Entriegelungsstellung angeordnet, so dass eine Bewegung des Ausstellbauteils 4 aus der Ruhestellung heraus nicht länger von dem Riegelmechanismus 9 blockiert ist. Somit ist der Stellhebel 19 bei seiner Bewegung in die erste Stellposition den Zughebel 16 in seine Wirkstellung, in welcher der Riegelmechanismus 9 in seiner Entriegelungsstellung angeordnet ist, drängend ausgebildet, wobei Figur 14 eine perspektivische Gesamtansicht und Figur 15 eine Detailansicht für die Entriegelungsstellung und insbesondere für das Rastelement 17 und das Gegenrastelement 18 zeigen. Damit ist der Entriegelungsvorgang für das Kraftfahrzeug-Ausstellbauteil-Antriebssystem 8 abgeschlossen und es schließt sich daran der Ausstellvorgang des Ausstellbauteils 4 an.

Bevor der Ausstellvorgang beschrieben wird, erfolgt eine weitere Beschreibung zu der Aktuator-Stelleinrichtung 8, welche zusätzlich zu dem Stellhebel 19 ein Ausstell-Element 25 aufweist, wie beispielsweise den Figuren 6 bis 9 zu entnehmen ist. Das Ausstell-Element 25 ist mit dem Ausstellbauteil 4 drehfest verbunden, wobei das Ausstell-Element 25 bei der Bewegung des Stellhebels 19 bis in die erste Stellposition von dem Stellhebel 19 bewegungsentkoppelt ist. Folglich verbleibt das Ausstell-Element 25 bei dem Entriegelungsvorgang unbewegt. Für die Bewegungsentkopplung ist das Ausstell-Element 25 mit dem Stellhebel 19 auf der der Antriebswelle 20 gegenüberliegenden Seite des Stellhebels 19 bis zu der ersten Stellposition des Stellhebels 19 drehbar verbunden. Zu diesem Zweck weist das Ausstell-Element 25 einen zylinderförmigen Grundkörper 26 auf, welcher in einen zylinderförmigen Basiskörper 27 des Stellhebels 19 eingesteckt angeordnet ist, wie aus der Zusammenschau der Figuren 5 bis 9 ersichtlich ist. Der zylinderförmige Basiskörper 27 weist dabei eine kreisbogenabschnittsförmige Ausnehmung 28 auf. Aus dieser Ausnehmung 28 steht ein hebelförmig ausgebildetes und an dem Grundkörper 26 angeformtes Anschlagelement 29 hervor. Quer von dem Grundkörper 26 des Ausstell-Elements 25 erstreckt sich ferner eine Antriebsachse, welche formschlüssig mit dem freien Ende des Schwenkarms 15 verbunden ist. Das Anschlagelement 29 steht derart aus der Ausnehmung 28 hervor, dass der Grundkörper 26 zu dem Basiskörper 27 bis zu den Endseiten der Ausnehmung 28 drehbar gelagert ist. Die Ausnehmung 28 in Verbindung mit dem Anschlagelement 30 erlaubt es, dass sich der Basiskörper 27 bei der Bewegung des Stellhebels 19 aus seiner Stellung in der Verriegelungsstellung des Riegelmechanismus 9 (siehe Figur 7) bis in die erste Stellposition (siehe Figur 8) relativ zu dem Grundkörper 26 bewegt und verschwenkt. Auf diese Weise ist die Aktuator-Stelleinrichtung 8 bei einer Bewegung bis zu der ersten Stellposition nach Art eines Freilaufs den Aktuator 7 von dem Ausstellbauteil 4 bewegungsentkoppelt ausgebildet. Bei der Bewegung des Stellhebels 19 aus der ersten Stellposition (siehe Figur 8) in Richtung der zweiten Stellposition gelangt das Anschlagelement 29 dann in Anlage an ein Ende der Ausnehmung 28 (siehe Figur 9) und ist dort derart anliegend angeordnet, dass sich der Stellhebel 19 und das Ausstell-Element 25 gemeinsam in Richtung der zweiten Stellposition bewegen. Auf diese Weise ist die Aktuator-Stelleinrichtung 8 bis zum Erreichen der ersten Stellposition den Aktuator 7 mit dem Riegelmechanismus 9 bewegungsgekoppelt ausgebildet. Ferner ist die Aktuator-Stelleinrichtung 8 ab der zweiten Stellposition den Aktuator 7 mit dem Ausstellbauteil 4 bewegungsgekoppelt ausgebildet.

Zur Unterstützung, dass das Ausstellbauteil 4 in seiner Ruhestellung gehalten wird oder damit die Bewegung des Ausstellbauteils 4 in die Betriebsstellung unterstützt wird, ist ein Federelement 30 vorgesehen, welches aus den Figuren 16 und 17 ersichtlich ist. Das Federelement 30 weist einen ersten Federarm 31 und einen zweiten Federarm 32 auf. Der erste Federarm 31 greift dabei an dem hebelförmig ausgebildeten Anschlagelement 29 des Ausstell-Elements 25 an, wohingegen der zweite Federarm 32 an dem Stellhebel 19 angeift. In Figur 16 ist der Betriebszustand der Verriegelungsstellung gezeigt, wobei in diesem Betriebszustand ein erstes Federmoment 33 in Ruhestellung des Ausstellbauteils 4 auf die Aktuator-Stelleinrichtung 8 wirkt In Figur 17 ist hingegen der Betriebszustand der Entriegelungsstellung gezeigt, wobei in der Entriegelungsstellung ein zweites Federmoment 34 in Betriebsstellung des Ausstellbauteils 4 auf die Aktuator-Stelleinrichtung 8 wirkt. Somit wirkt das Federelement 30 die jeweiligen Betriebszustände (Verriegelungsstellung und Entriegelungsstellung) unterstützend auf die Aktuator-Stelleinrichtung 8 ein.

Zurückkehrend zu der Beschreibung des Ausstellvorgangs des Ausstellbauteils 4, welcher sich dem Entriegelungsvorgang anschließt, ist in den Figuren 18 und 19 eine Zwischenstellung gezeigt, in welcher das Ausstellbauteil 4 in Richtung seiner Betriebsstellung bewegt ist, die Betriebsstellung aber noch nicht erreicht hat. Das mit dem Ausstellbauteil 4 drehfest verbundene Ausstell-Element 25 ist bei der Bewegung des Stellhebels 19 ab der zweiten Stellposition mit dem Stellhebel 19 bewegungsgekoppelt verbunden, so dass das Ausstellelement 4 aus der Ausnehmung 11 des Trägerrahmens 10 herausbewegt wird. Wie aus der Figur 19 zu erkennen ist, gleitet dabei der Stellhebel 19 endseitig an einer Rückstellfläche 35 des Zughebels 16 entlang, wobei dabei der Zughebel 16 wieder in seine Ausgangsstellung zurückbewegt wird. Die Rückstellfläche 35 und die Entriegelungsfläche 24 bilden eine bogenförmige Gesamtfläche, wobei der Stellhebel 19 in seiner ersten Stellposition in einem Scheitelpunkt 36 dieser Gesamtfläche liegend angeordnet ist, wie es in Figur 13 gezeigt ist. Mit Bezug auf die Figuren 18 und 19 bewegt sich der Stellhebel 19 bei seiner Bewegung ab der zweiten Stellposition an der Rückstellfläche 35 anliegend entlang, so dass der Zughebel 16 infolge des bogenförmigen Verlaufs der Rückstellfläche 35 in seine Ausgangsstellung zurückbewegt wird. Es sei angemerkt, dass die Aktuator-Stelleinrichtung 8 bei einer Bewegung entlang des Stellweges 14 ab der ersten Stellposition den Aktuator 7 von dem Riegelmechanismus 9 bewegungsentkoppelt ausgebildet ist.

Die Figuren 20 und 21 zeigen einen Betriebszustand, bei welchem die Aktuator-Stelleinrichtung 8 nun das Ausstellbauteil 4 in seine Betriebsstellung bewegt hat, wobei in der Betriebsstellung das Ausstellbauteil 4 aus der Ausnehmung 11 des Trägerelements 6 herausbewegt angeordnet ist und der Schwenkarm 15 am Rand der Ausnehmung 11 hervorsteht. Wie ferner zu erkennen ist, ist der Zughebel 16 in seiner Ausgangsstellung angeordnet, wobei der Stellhebel 19 nicht mehr an der Rückstellfläche 35 anliegt.

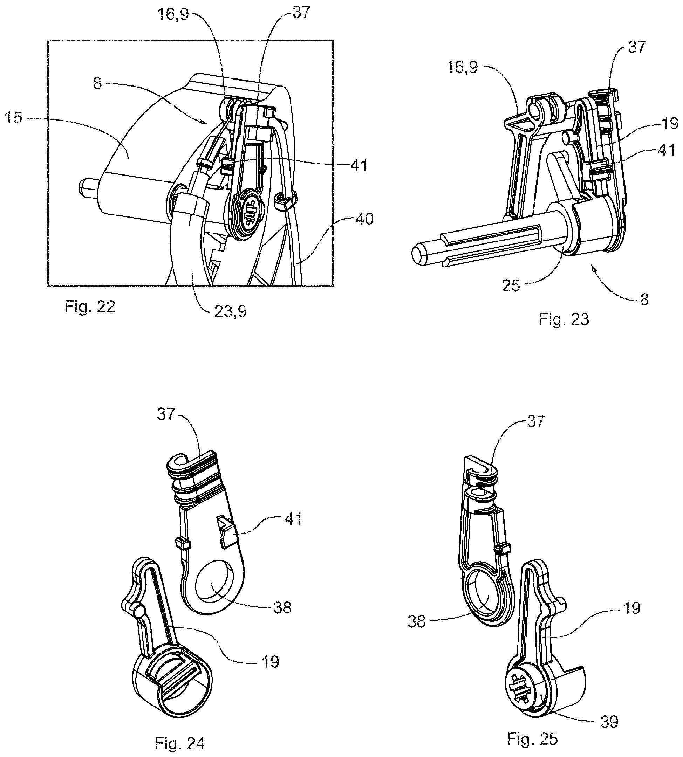

In den Figuren 22 bis 25 ist eine Noteinrichtung gezeigt, durch welche im Fall eines Stromausfalls, in welchem der Aktuator die Entriegelungs- und Ausstellvorgänge nicht bewirken kann, ein Notbetrieb durch einen Benutzer möglich ist, bei welchem eine manuelle Entriegelung und Ausstellung des Ausstellbauteils erfolgt. Zu diesem Zweck ist ein manuell betätigbarer Notbetätigungshebel 37 vorgesehen, welcher drehbar an dem Stellhebel 19 gelagert ist und welcher durch einen Benutzer in eine Notbetätigungsstellung bewegbar ist, in welcher das Ausstellbauteil 4 in seine Betriebsstellung bewegt angeordnet ist. Wie den Figuren 24 und 25 zu entnehmen ist, weist der Notbetätigungshebel 37 an seinem Schenkfuß einen kreisförmigen Durchlass 38 auf, welcher auf einen zylindrischen Lagerungsansatz 39 des Stellhebels 19 ausgebildet ist. Durch den Durchlass 38 hindurch erstreckt sich die mit dem Stellhebel 19 drehfest verbundene Antriebswelle 20 des Aktuators 7. Eine Verschwenkung des Notbetätigungshebels 37 ist durch einen Notbowdenzug 40 (siehe Figuren 2, 3 oder 23) möglich, von welchem ein erstes Ende endseitig an dem Notbetätigungshebel 37 angebracht ist. Das andere Ende des Notbowdenzugs 40 kann dann an beliebiger Stelle in oder an dem Kraftfahrzeug 1 angeordnet sein, damit ein Benutzer den Notbowdenzug 40 betätigen kann. Die Betätigung des Notbowdenzugs 40 bewirkt, dass der Notbetätigungshebel 37 verschwenkt wird und bei seiner Verschwenkung den Stellhebel 19 mitnehmend verschwenkt. Hierzu ist an dem Notbetätigungshebel 37 ein Mitnehmer-Ansatz 41 ausgebildet, welcher bei einer Bewegung des Notbetätigungshebels 37 in Richtung seiner Notbetätigungsstellung in Anlage an den Stellhebel 19 gelangt und den Stellhebel 19 entlang seines Stellweges 14 in die erste Stellposition und in und über die zweite Stellposition bewegend ausgebildet ist. Somit erfolgt ein Entriegelungsvorgang und ein anschließender Ausstellvorgang, welcher in dem Notbetrieb mit Hilfe der Kraft eines Benutzers über den Notbetätigungshebel 37 bewirkt wird und sich nur dadurch von dem Normalbetrieb, in welchem der Aktuator 7 den Stellhebel 19 bewegt, unterscheidet, dass der Stellhebel 19 nun über den Notbetätigungshebel 37 und durch die manuelle Kraft des Benutzers bewegt wird.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der von den Ansprüchen definierte Bereich der Erfindung verlassen wird.

### Bezugszeichenliste

- 1: Kraftfahrzeug
- 2: Kraftfahrzeugtüraußengriff
- 3: Ladeklappe
- 4: Ausstellbauteil
- 5: Kraftfahrzeug-Ausstellbauteil-Antriebssystem
- 6: Trägerelement
- 7: Aktuator
- 8: Aktuator-Stelleinrichtung
- 9: Riegelmechanismus
- 10: Trägerrahmen
- 11: Ausnehmung
- 12: Lagerungseinrichtung
- 13: Lagerungsdeckel
- 14: Stellweg
- 15: Schwenkarm
- 16: Zughebel
- 17: Rastelement
- 18: Gegenrastelement
- 19: Stellhebel
- 20: Antriebswelle
- 21: Schwenkachse
- 22: Rasthaken
- 23: Bowdenzugkabel
- 24: Entriegelungsfläche
- 25: Ausstell-Element
- 26: zylinderförmiger Grundkörper
- 27: zylinderförmiger Basiskörper
- 28: kreisbogenabschnittsförmige Ausnehmung
- 29: Anschlagelement
- 30: Federelement
- 31: erster Federarm
- 32: zweiter Federarm
- 33: erstes Federmoment
- 34: zweites Federmoment
- 35: Rückstellfläche
- 36: Scheitelpunkt
- 37: Notbetätigungshebel
- 38: Durchlass
- 39: Lagerungsansatz
- 40: Notbowdenzug
- 41: Mitnehmeransatz

## Patentansprüche

1. Kraftfahrzeug-Ausstellbauteil-Antriebssystem (5), aufweisend:
• ein an einer Kraftfahrzeug-Karosserie befestigbar ausgebildetes Trägerelement (6), welches einen eine Ausnehmung (11) umgebenden Trägerrahmen (10) und eine sich von dem Trägerrahmen (10) aus erstreckende Lagerungseinrichtung (12) aufweist,
• einen Aktuator (7), welcher an dem Trägerelement (6) befestigt ist,
• eine Aktuator-Stelleinrichtung (8), welche bewegbar an dem Trägerelement (6) gelagert ist und welche von dem Aktuator (7) aus einer Grundposition heraus entlang eines Stellweges (14) antreibend ausgebildet ist,
• ein Ausstellbauteil (4), welches zwischen einer Ruhestellung, in welcher das Ausstellbauteil (4) bündig in der Ausnehmung (11) des Trägerelements (6) angeordnet ist, und einer Betriebsstellung, in welcher das Ausstellbauteil (4) aus der Ausnehmung (11) des Trägerelements (6) herausbewegt angeordnet ist, bewegbar an dem Trägerelement (6) gelagert ist, und
• einen Riegelmechanismus (9), welcher eine Verriegelungsstellung, in welcher der Riegelmechanismus (9) eine Bewegung des Ausstellbauteils (4 aus der Ruhestellung heraus blockierend ausgebildet ist, oder eine Entriegelungsstellung, in welcher der Riegelmechanismus (9) eine Bewegung des Ausstellbauteils (4) freigebend ausgebildet ist, einnehmbar ausgebildet ist,
wobei die Aktuator-Stelleinrichtung (8) in Abhängigkeit ihrer von dem Aktuator (7) bewirkten Bewegung entlang des Stellweges (14) entweder in einer ersten Stellposition eine Entriegelungs-Kraft auf den Riegelmechanismus (9) zu dessen Entriegelungs-Bewegung aus der Verriegelungsstellung in die Entriegelungsstellung und ab einer zweiten Stellposition eine Ausstell-Kraft auf das Ausstellbauteil (4) zu dessen Ausstell-Bewegung aus der Ruhestellung in die Betriebsstellung übertragend ausgebildet ist.

2. Kraftfahrzeug-Ausstellbauteil-Antriebssystem (5) nach Anspruch 1, wobei die Aktuator-Stelleinrichtung (8) bis zum Erreichen der ersten Stellposition den Aktuator (7) mit dem Riegelmechanismus (9) bewegungsgekoppelt ausgebildet ist und ab der zweiten Stellposition den Aktuator (7) mit dem Ausstellbauteil (4) bewegungsgekoppelt ausgebildet ist.

3. Kraftfahrzeug-Ausstellbauteil-Antriebssystem (5) nach Anspruch 1 oder 2, wobei die Aktuator-Stelleinrichtung (8) bei einer Bewegung entlang des Stellweges (14) ab der ersten Stellposition den Aktuator (7) von dem Riegelmechanismus (9) bewegungsentkoppelt ausgebildet ist.

4. Kraftfahrzeug-Ausstellbauteil-Antriebssystem (5) nach einem der vorhergehenden Ansprüche, wobei die Aktuator-Stelleinrichtung (8) bei einer Bewegung bis zu der ersten Stellposition nach Art eines Freilaufs den Aktuator (7) von dem Ausstellbauteil (4) bewegungsentkoppelt ausgebildet ist.

5. Kraftfahrzeug-Ausstellbauteil-Antriebssystem (5) nach einem der vorhergehenden Ansprüche, wobei die Aktuator-Stelleinrichtung (8) einen Stellhebel (19) aufweist, welcher mit einer Antriebswelle (20) des Aktuators (7) drehfest verbunden ist, wobei der Stellhebel (19) bei einer Bewegung entlang des Stellwegs (14) bis zu der ersten Stellposition mit dem Riegelmechanismus (9) wirkverbunden ist.

6. Kraftfahrzeug-Ausstellbauteil-Antriebssystem (5) nach Anspruch 5, wobei der Riegelmechanismus (9) einen Zughebel (16) aufweist, welcher schwenkbar an dem Trägerelement (6) gelagert ist, wobei der Stellhebel (19) bei seiner Bewegung bis zu der ersten Stellposition die Entriegelungs-Kraft auf den Zughebel (16) übertragend ausgebildet ist.

7. Kraftfahrzeug-Ausstellbauteil-Antriebssystem (5) nach Anspruch 6, wobei der Riegelmechanismus (9) ein schwenkbar an dem Trägerelement (6) gelagertes Rastelement (17) und ein an dem Ausstellbauteil (4) angeformtes Gegenrastelement (18) aufweist, wobei das Rastelement (17) über ein Bowdenzugkabel (23) mit dem Zughebel (16) bewegungsgekoppelt ausgebildet ist, und wobei in der Verriegelungsstellung das Rastelement (17) mit dem Gegenrastelement (18) in Eingriff stehend angeordnet ist und in der Entriegelungsstellung das Rastelement (17) außer Eingriff mit dem Gegenrastelement (18) stehend angeordnet ist.

8. Kraftfahrzeug-Ausstellbauteil-Antriebssystem (5) nach Anspruch 6 oder 7, wobei der Zughebel (16) bei in der Verriegelungsstellung angeordnetem Riegelmechanismus (9) in einer Ausgangsstellung angeordnet ist, wobei der Stellhebel (19) bei seiner Bewegung in die erste Stellposition den Zughebel (16) in eine Wirkstellung, in welcher der Riegelmechanismus (9) in seiner Entriegelungsstellung angeordnet ist, drängend ausgebildet ist.

9. Kraftfahrzeug-Ausstellbauteil-Antriebssystem (5) nach Anspruch 8, wobei der Zughebel (16) eine Rückstellfläche (35) aufweist, an welcher sich der Stellhebel (19) bei seiner Bewegung ab der zweiten Stellposition anliegend entlang bewegt, wobei die Rückstellfläche (35) den Zughebel (16) bei der Bewegung des Stellhebels (16) ab der zweiten Stellposition in seine Ausgangsstellung zurückbewegend ausgebildet ist.

10. Kraftfahrzeug-Ausstellbauteil-Antriebssystem (5) nach einem der Ansprüche 5 bis 9, wobei die Aktuator-Stelleinrichtung (8) ein mit dem Ausstellbauteil (4) drehfest verbundenes Ausstell-Element (25) aufweist, welches bei der Bewegung des Stellhebels (19) bis in die erste Stellposition von dem Stellhebel (19) bewegungsentkoppelt ist und welches bei der Bewegung des Stellhebels (19) ab der zweiten Stellposition mit dem Stellhebel (19) bewegungsgekoppelt verbunden ist.

11. Kraftfahrzeug-Ausstellbauteil-Antriebssystem (5) nach Anspruch 10, wobei das Ausstell-Element (25) mit dem Stellhebel (19) auf der der Antriebswelle (20) gegenüberliegenden Seite des Stellhebels (19) drehbar verbunden ist.

12. Kraftfahrzeug-Ausstellbauteil-Antriebssystem (5) nach Anspruch 10 oder 11, wobei das Ausstell-Element (25) einen zylinderförmigen Grundkörper (26) aufweist, welcher in einen zylinderförmigen Basiskörper (27) des Stellhebels (19) eingesteckt angeordnet ist, wobei der zylinderförmige Basiskörper (27) eine kreisbogenabschnittsförmige Ausnehmung (28) aufweist, aus welcher ein hebelförmig ausgebildetes und an dem Grundkörper (26) angeformtes Anschlagelement (29) derart hervorsteht, dass der Grundkörper (26) zu dem Basiskörper (27) bis zu den Endseiten der Ausnehmung (28) drehbar gelagert ist.

13. Kraftfahrzeug-Ausstellbauteil-Antriebssystem (5) nach Anspruch 12, wobei sich der Basiskörper (27) bei der Bewegung des Stellhebels (19) bis in die erste Stellposition relativ zu dem Grundkörper (26) bewegt, und wobei bei der Bewegung des Stellhebels (19) aus der ersten Stellposition in Richtung der zweiten Stellposition das Anschlagelement (29) an einem Ende der Ausnehmung (28) derart anliegend angeordnet ist, dass sich der Stellhebel (19) und das Ausstell-Element (25) gemeinsam in Richtung der zweiten Stellposition bewegen.

14. Kraftfahrzeug-Ausstellbauteil-Antriebssystem (5) nach Anspruch 12 oder 13, wobei ein Federelement (30) vorgesehen ist, von welchem ein erster Federarm (31) an dem hebelförmig ausgebildeten Anschlagelement (29) des Ausstell-Elements (25) und ein zweiter Federarm (32) an dem Stellhebel (19) derart angeifen, dass in der Verriegelungsstellung ein erstes Federmoment (33) in Ruhestellung des Ausstellbauteils (4) auf die Aktuator-Stelleinrichtung (8) wirkt und in der Entriegelungsstellung ein zweites Federmoment (34) in Betriebsstellung des Ausstellbauteils (4) auf die Aktuator-Stelleinrichtung (8) wirkt.

15. Kraftfahrzeug-Ausstellbauteil-Antriebssystem (5) nach einem der Ansprüche 5 bis 14, wobei ein manuell betätigbarer Notbetätigungshebel (37) vorgesehen ist, welcher drehbar an dem Stellhebel (19) gelagert ist und welcher durch einen Benutzer in eine Notbetätigungsstellung bewegbar ist, in welcher das Ausstellbauteil (4) in seine Betriebsstellung bewegt angeordnet ist.

16. Kraftfahrzeug-Ausstellbauteil-Antriebssystem (5) nach Anspruch 15, wobei an dem Notbetätigungshebel (37) ein Mitnehmer-Ansatz (41) ausgebildet ist, welcher bei einer Bewegung des Notbetätigungshebels (37) in Richtung seiner Notbetätigungsstellung in Anlage an den Stellhebel (19) gelangt und den Stellhebel (19) entlang seines Stellweges (14) in die erste Stellposition und in und über die zweite Stellposition hinaus bewegend ausgebildet ist.

17. Kraftfahrzeug-Ausstellbauteil-Antriebssystem (5) nach einem der Ansprüche 1 bis 16, wobei das Ausstellbauteil (4) als ein ausfahrbarer und flächenbündiger Kraftfahrzeugtüraußengriff (2) ausgebildet ist, welcher in der Betriebsstellung von einem Bediener ergreifbar und handhabbar angeordnet ist.

18. Kraftfahrzeug-Ausstellbauteil-Antriebssystem (5) nach einem der Ansprüche 1 bis 16, wobei das Ausstellbauteil (4) als eine Ladeklappe (3) ausgebildet ist, welche in der Betriebsstellung die Ausnehmung für einen Ladestecker freigebend angeordnet ist.
